# EUROPÄISCHE PATENTANMELDUNG

(11) **EP 2 927 058 A1**
(43) Veröffentlichungstag der Anmeldung: **07.10.2015**
(21) Anmeldenummer: 15160545.8
(22) Anmeldetag: 24.03.2015
(51) Int. Cl.: B60R 19/03, B60R 19/34

(54) **Stoßfängerquerträgerbaugruppe für ein Fahrzeug sowie Verfahren zu dessen Herstellung**

(30) Priorität: 01.04.2014 DE 102014104554
(71) Anmelder: Kirchhoff Automotive Deutschland GmbH, 57439 Attendorn (DE)
(72) Erfinder: Töller, Marco, 51107 Köln (DE)
(74) Vertreter: Haverkamp, Jens

(57) **Zusammenfassung**

Eine Stoßfängerquerträgerbaugruppe 1 für ein Kraftfahrzeug, umfasst einen profilierten Stoßfängerquerträger 2 und daran jeweils zum Chassis des Fahrzeuges weisend angeschlossene Energieabsorptionsbauteile 3. Jedes Energieabsorptionsbauteil 3 ist aus einem vorderen, zum Stoßfängerquerträger 2 weisenden Abschnitt 4 aus Stahl und einem hinteren, von dem Stoßfängerquerträger 2 wegweisenden Abschnitt 5 aus einem Aluminiumwerkstoff hergestellt. Der vordere Abschnitt 4 ist mit dem hinteren Abschnitt 5 durch eine Fügeverbindung mit Schweiß- oder Lotzugabe unter Ausbildung einer Fügeraupe 11 verbunden. Der hintere Abschnitt 5 umfasst einen sich umfänglich erstreckenden Faltenbildungsinitialisierungsabschnitt 6. Dieser ist mechanisch nachgiebiger als die daran angrenzenden Abschnitte. Der Faltenbildungsinitialisierungsabschnitt 6 ist zwischen dem Abschnitt der Fügeraupe 11 auf der einen Seite und den benachbarten Abschnitten des hinteren Abschnittes 5 auf der anderen Seite angeordnet, wobei der Wärmeeintrag beim Fügen zugleich genutzt wird, um den Faltenbildungsinitialisierungsabschnitt 6 auszubilden.

Beschrieben ist des Weiteren ein Verfahren zum Herstellen einer solchen Stoßfängerquerträgerbaugruppe.

## Beschreibung

Die vorliegende Erfindung betrifft eine Stoßfängerquerträgerbaugruppe für ein Kraftfahrzeug, umfassend einen profilierten Stoßfängerquerträger und daran jeweils zum Chassis des Fahrzeuges weisend angeschlossene Energieabsorptionsbauteile, wobei jedes Energieabsorptionsbauteil aus einem vorderen, zum Stoßfängerquerträger weisenden Abschnitt und einem hinteren, von dem Stoßfängerquerträger wegweisenden Abschnitt hergestellt ist und der vordere Abschnitt mit dem hinteren Abschnitt durch eine Fügeverbindung mit Schweiß- oder Lotzugabe, unter Ausbildung einer Fügeraupe verbunden ist und wobei der hintere Abschnitt einen sich umfänglich erstreckenden, gegenüber den angrenzenden Abschnitten mechanisch nachgiebigeren Faltenbildungsinitialisierungsabschnitt umfasst. Ferner betrifft die Erfindung ein Verfahren zur Herstellung einer solchen Stoßfängerquerträgerbaugruppe.

Der Umweltgedanke in Gestalt von zu reduzierenden Emissionswerten veranlasst die Automobilhersteller dazu ihre Fahrzeuge immer leichter zu gestalten. Gleichzeitig besteht aber die Pflicht den stetig steigenden gesetzlichen Sicherheitsanforderungen Rechnung zu tragen. Vor allem bei sicherheitsrelevanten Bauteilen bzw. Baugruppen stellt dies eine große Herausforderung dar. Dies vor allem vor dem Hintergrund, dass diese in der Regel eine besonders hohe Festigkeit aufweisen müssen, um den gesetzlichen Anforderungen zu entsprechen.

Hinzu kommt, dass auch entsprechende versicherungstechnische Anforderungen zu berücksichtigen sind, da sich diesbezüglich eine leichte Reparaturmöglichkeit nach einem Zusammenstoß besonders günstig bei den Versicherungsbedingungen auswirkt.

Insgesamt betrachtet, streben die Automobilhersteller danach, auch bei den sicherheitsrelevanten Bauteilen, wie etwa bei einer Stoßfängerquerträgerbaugruppe, eine hohe Crashperformance mit Hilfe von Leichtbauteilen zu verwirklichen, da reine Stahlsysteme mit einem höheren Gewicht und reine Leichtmetalllösungen mit höheren Kosten einhergehen.

Im Stand der Technik sind bereits Ansatzpunkte von Systemen, die diesen Anforderungen Rechnung tragen, zu finden, wobei vor allem die so genannte Hybridtechnologie durchaus Gewichteinsparungspotential erkennen lässt.

Grundsätzlich umfasst eine Stoßfängerquerträgerbaugruppe einen Stoßfängerquerträger sowie wenigstens zwei, auch als Crashboxen bezeichnete Energieabsorptionsbauteile. Diese sind in den äußeren Endabschnitten der Rückseite des Stoßfängerquerträgers jeweils als Verbindungsteil zu den Längsträgern der Karosserie angeordnet. Im Falle eines Crashs dienen diese zur Absorption von Energie, um die eigentliche Karosserie des Fahrzeuges möglichst unbeschädigt zu lassen. In eine solche Crashbox eingeleitete Energie resultiert in einer plastischen Deformation derselben, die sich durch die eingeleitete Energie typischerweise nach Art eines Faltenbalges zusammenfalten.

Als Energieabsorptionsbauteile werden im Stand der Technik beispielsweise stranggepresste, kastenförmige, auch mehrkammerig ausgeführte Extrusionsprofile aus einer entsprechend geeigneten Aluminiumlegierung verwendet. Einschlägige Aluminiumlegierungen werden aus diesem Grunde auch als Crashlegierung angesprochen. Zum Anordnen eines solchen Energieabsorptionsbauteils zwischen dem Chassis des Fahrzeuges und dem Stoßfängerquerträger umfasst das Energieabsorptionsbauteil neben dem eigentlichen Energieabsorptionsbauteil Anschlussmittel an seinen Enden, um das eine Ende an das Chassis und das anderen Ende an den Stoßfängerquerträger anschließen zu können. Zum Anschließen des Energieabsorptionsbauteils an ein Chassis dient eine typischerweise mit dem Energieabsorptionsbauteil verschweißte Anbindungsplatte, die zum Anschließen des Energieabsorptionsbauteils an das Chassis mit dessen Fahrzeuglängsträger verschraubt wird. Ein Anschluss des Energieabsorptionsbauteils an den Stoßfängerquerträger erfolgt bevorzugt über Schraubverbindungen, vor allem dann, wenn das Energieabsorptionsprofil materialunterschiedlich zu dem Material des Stoßfängerquerträgers ist.

Bekannt sind ferner z.B. aus DE 10 2009 013 322 A1 Stoßfängerquerträgerbaugruppen, bei denen die Stoßfängerquerträger aus einem Aluminiumwerkstoff und die Energieabsorptionsbauteile aus Stahl oder umgekehrt der Stoßfängerquerträger aus Stahl und die Energieabsorptionsbauteile aus Aluminium ausgebildet sind. Nachteilig dabei wirkt sich bei diesem Konzept unter anderem eine nur mäßige Verfahrensrobustheit durch Ausbilden instabiler intermetallischer Phasen, einer notwendigen stahlseitigen Zinkbeschichtung, einer notwendigen aluminiumseitigen Reinigung, einer geringen Fügegeschwindigkeit, sowie überhöhte und/oder breite Lotnähte aus. Überdies erweist sich ein solches Verfahren als kostenintensiv. Zudem bereitet die Anbindungsstelle der Energieabsorptionsbauteile, aufgrund der im Stand der Technik vorhandenen und nur bedingt zufrieden stellenden Verbindungstechniken bei hybriden Bauteilen in Kombination mit dem erforderlichen Korrosionsschutz häufig Probleme. Dies vor allem, da in dieser im Stand der Technik gezeigten Stoßfängerquerträgerbaugruppe die Anbindung des Energieabsorptionsbauteils aus Aluminium am Stoßfängerquerträger aus Stahl an einem T-Stoß erfolgt. Dadurch erfolgt an der Verbindungsstelle der hybriden Bauteile eine geometrische Aussteifung. Bei einer anschließend vorgenommenen kathodischen Tauchlackierung (KTL) zur Unterbindung von Korrosion besteht die Gefahr, dass der Verbindungsbereich nicht vollständig benetzt wird und in Folge dessen ein Elektrolyt im überlappenden Bereich zu Kontaktkorrosionserscheinungen führen kann.

Ein besonderes Problem bei Hybridbaugruppen ist, wie vorstehend angerissen, mitunter die aufgrund der unterschiedlichen Materialien auftretende Kontaktkorrosion, die schlechte Schweißbarkeit und die aufwendigen und komplizierten Herstellungsschritte. Daraus resultierend, erfolgt bei herkömmlichen hybriden Stoßfängerquerträgerbaugruppen die Anbindung von Crashboxen an die Karosserie oder am Querträger oftmals mechanisch oder mittels Kleben unter Zwischenschaltung einer Adapterplatte, wodurch ein zusätzliches Bauteil für die Verbindung notwendig ist, den Arbeitsaufwand, das Gewicht und die Kosten des Bauteils erhöht. Eine mechanische Anbindung ist in DE 10 2004 013 713 B4 offenbart.

Aus DE 20 2005 010 964 U1 ist ein Hybrid-Verbindungselement, insbesondere zur Aufnahme kinetischer Aufprallenergie und/oder zur Aufnahme der beim Abschleppen von Fahrzeugen auftretenden Kräften bekannt. Dieses Verbindungselement umfasst wenigstens ein Krafteinleitungselement, das die Kraft in das übrige Verbindungselement einleitet, sowie wenigstens ein Energieaufnahmeelement, das die eingeleitete Kraft zumindest teilweise durch Verformung aufnimmt. Beide Elemente stehen miteinander in Verbindung. Bei dem Krafteinleitungselement handelt es sich um ein aus Stahl oder Aluminium hergestelltes Element. Das zumindest eine Energieaufnahmeelement besteht vorzugsweise aus einem Faserverbundwerkstoff. Dieses Hybrid-Verbindungselement verbindet die Vorteile unterschiedlicher Werkstoffe, und zwar die Eigenschaften von Faserverbundwerkstoffen, Energie aufzunehmen, und die Eigenschaften metallischer Werkstoffe, Kraft in das Hybrid-Verbindungselement einzuleiten. Beide Elemente sind mit Vorspannung miteinander verbunden. Hierzu wird in diesem Dokument vorgeschlagen, einen Zuganker vorzusehen.

In WO 2004 030 856 A1 wird ein Schweißlötverfahren zum Fügen zweier Bleche aus Eisenwerkstoff bzw. Aluminiumwerkstoff zur Herstellung eines Halbzeugs offenbart.

Aufgabe der Erfindung ist es, eine Stoßfängerquerträgerbaugruppe zur Verfügung zu stellen, die die zuvor im Stand der Technik diskutierten Probleme beseitigt oder zumindest verringert, indem diese bei Gewichtsersparnis und leichterer Herstellbarkeit die geforderten gesetzlichen Bestimmungen an die Crashanforderungen erfüllt und eine optimiertes Anbinden bzw. Einbinden der Energieabsorptionsbauteile an bzw. in die Fahrzeugstruktur durch werkstoffspezifisches Fügen ermöglicht.

Gelöst wird diese Aufgabe durch eine eingangs genannte, gattungsgemäße Stoßfängerquerträgerbaugruppe, bei der der vordere Abschnitt aus Stahl und der hintere Abschnitt aus einem Aluminiumwerkstoff hergestellt sind und dass der Faltenbildungsinitialisierungsabschnitt zwischen dem Abschnitt der Fügeraupe auf der einen Seite und den benachbarten weiteren Abschnitten des hinteren Abschnittes auf der anderen Seite angeordnet ist, wobei der Wärmeintrag beim Fügen zugleich genutzt wird, um den Faltenbildungsinitialisierungsabschnitt auszubilden.

Die Stoßfängerquerträgerbaugruppe ist danach derart ausgebildet, dass der vordere Abschnitt aus Stahl des darin eingebundenen Energieabsorptionsbauteils einen definierten Krafteinleitungsabschnitt ausbildet, der im Deformationsfall nicht gefaltet wird, jedenfalls nicht initial gefaltet wird und in seiner Längserstreckung im Verhältnis zum hinteren Abschnitt des Energieabsorptionsbauteils kleiner oder gleich ausgebildet ist. Um eine Faltenanlage - eine Initialisierung der Faltenbildung - grundsätzlich auch ohne strukturelle Vorgaben im Bauteil zu erzielen, verfügt ein solches Energieabsorptionsbauteil in seinem an den als Krafteinleitungsabschnitt dienenden Stahlabschnitt grenzenden hinteren Abschnitt, hergestellt aus einem Aluminiumwerkstoff, typischerweise aus einer so genannten Crashlegierung, über einen Faltenbildungsinitialisierungsabschnitt. Dieser ist mechanisch weicher als der angrenzende Krafteinleitungsabschnitt bzw. die Fügezone, durch die der Stahlabschnitt mit dem Aluminiumwerkstoffabschnitt zusammengefügt ist. Dieser Abschnitt ist auch weicher als die daran grenzenden weiteren Abschnitte des Aluminiumwerkstoffabschnittes. Die Fügeverbindung wird mit Schweiß- bzw. Lotzugabe durchgeführt. Die ausgebildete Fügeraupe, die typischerweise überlappend auf den Endabschnitt des Stahlabschnittes und des Aluminiumwerkstoffabschnittes sitzt, bildet zugleich nach Art einer mechanischen Stabilisierungsmanschette eine Stabilisierung des durch den Fügevorgang und den damit einhergehenden Wärmeeintrag geschwächten Metalls. Zugleich wird der Wärmeeintrag gemäß einer bevorzugten Ausführung der Erfindung beim Fügen genutzt, um den Faltenbildungsinitialisierungsabschnitt auszubilden. Dann wird der Fügevorgang derart ausgeführt, dass sich ein an die Fügestelle angrenzender Abschnitt in dem Aluminiumwerkstoffabschnitt des Energieabsorptionsbauteils mit einer gewissen Breite ausbildet, in der die Festigkeitseigenschaften herabgesetzt sind. Die Breite dieses Faltenbildungsinitialisierungsabschnittes ist hinreichend groß, damit eine initiale Faltenbildung in diesem, bezüglich seiner Festigkeit geschwächten Abschnitt bei einer Beanspruchung des Energieabsorptionsbauteils im Crashfalle zuerst einsetzt.

Grundsätzlich ist es ebenfalls möglich, den Faltenbildungsinitialisierungsabschnitt des Energieabsorptionsbauteils durch eine entsprechende lokale Wärmebehandlung nach dem Fügen des vorderen Abschnittes mit dem hinteren Abschnitt auszubilden oder, sollte die Wärme beim Fügevorgang bereits genutzt werden, um den Faltenbildungsinitialisierungsabschnitt zu verbreitern.

Wenn im Rahmen dieser Ausführungen die Adjektive "vordere" oder "hintere", etwa in Verbindung mit den beiden Abschnitten eines Energieabsorptionsbauteils die Rede ist, handelt es sich hierbei um Beschreibungen der Richtungen, die von der Karosserie aus betrachtet werden, wobei "vordere" und "hintere" Richtungen in der x-Achse sind. "Vordere" definiert demnach die von der Karosserie abgewandte Richtung und "hintere" die der Karosserie zugewandte Richtung.

Überraschender Weise hat sich gezeigt, dass es möglich ist, durch Fügen des Stahlabschnittes an den Aluminiumwerkstoffabschnitt, etwa im Wege eines Schweißlötens und den damit einhergehenden Wärmeeintrag in die zu fügenden Teile eine Wärmeeinflusszone mit hinreichender Erstreckung in x-Richtung und damit einen weicheren Bereich im Energieabsorptionsbauteil auszubilden, der geeignet ist, bei einem horizontalen Krafteintrag einen definierten Faltvorgang im hinteren Abschnitt zu initialisieren. Nicht unwesentlich ist, dass ein solches Fügen durchgeführt werden kann, ohne dass die angebrachte Fügenaht während der Falteninitialisierung reißt, so dass der vordere Abschnitt des Energieabsorptionsbauteils sowohl als Anbindungsabschnitt zum Anschließen des Energieabsorptionsbauteils an den Stoßfängerquerträger als auch als Krafteinleitungsabschnitt fungiert, ohne selbst initiale Energie zu absorbieren. In besonderem Maße gelingt dieses, wenn als Fügeverfahren ein Schweißlötverfahren durchgeführt wird.

Vorteilhaft ist, wenn der vordere, aus Stahl bestehende Abschnitt des Energieabsorptionsbauteils ab der hinteren Anlagefläche des Stoßfängerquerträgers in Richtung zur Karosserie wenigstens eine Längserstreckung von 5,0 mm aufweist, damit der unfallbedingte horizontale Krafteintrag über die Stirnfläche des vorderen Abschnitts erfolgen kann. Eine kürzere Ausbildung als 5,0 mm könnte dazu führen, dass durch den Wärmeeintrag beim Fügen am Stoßfängerquerträger eine vorgenommene Schweißlötverbindung beschädigt wird.

Zudem gibt es weitere Einflussfaktoren, über die die Funktionalität eines solchen Energieabsorptionsbauteils sowie ein mit diesen ausgerüsteter Stoßfängerquerträger als Stoßfängerquerträgerbaugruppe eingerichtet werden kann, wie etwa Materialstärke oder Legierungszusammensetzung. Bevorzugt wird der vordere Abschnitt des Energieabsorptionsbauteils aus Stahl mit einer Wandstärke zwischen 1,0 mm und 2,0 mm und der hintere Abschnitt des Energieabsorptionsbauteils mit einer Wandstärke zwischen 1,5 mm und 3,0 mm ausgebildet. Außerdem kommt als bevorzugtes Material zum Ausbilden des hinteren Abschnitts eine 6000er Aluminiumlegierung zum Einsatz. Denkbar ist auch jede weitere Art von Aluminiumlegierung, die den Sicherheitsanforderungen entsprechende Festigkeitswerte bzw. Dehngrenzen und damit die geforderte Crashfähigkeitsvoraussetzungen aufweist.

Die Energieabsorptionsbauteile sind in einem vorderen Abschnitt aus Stahl und im hinteren Abschnitt aus Aluminium ausgebildet und können daher ohne weitere aufwendige Bearbeitungsschritte oder zusätzliche Bauteile direkt an der zur Karosserie gerichteten Seite des Stoßfängerquerträgers mittels Schweißen (Stahl-Stahl), insbesondere durch MAG-Schweißen und an der karosserieseitigen Anbindungsplatte mittels Schweißen (Aluminiumwerkstoff-Aluminiumwerkstoff), insbesondere durch MIG-Schweißen, kostengünstig gefügt werden. Daher entfallen bei einer Umsetzung dieses Konzeptes die zu dem Stand der Technik angeführten Probleme bei den Anbindungsstellen der Energieabsorptionsbauteile bei hybrider Ausbildung und wenigstens gleich bleibender Crashperformance bei niedrigerem Gewicht.

Die hier angewendete hybride Bauweise zeigt sich auch bei den konstruktiven Möglichkeiten äußerst variabel, da durch einen vorgenommenen Wärmeeintrag eine Wärmeeinflusszone zur Ausbildung eines Faltenbildungsinitialisierungsabschnittes innerhalb des Energieabsorptionsbauteils definiert ausgebildet und damit bauraumspezifisch äußerst flexibel angepasst werden kann. Ebenso kann durch den Einsatz von industriell einsetzbaren Standard-Fügeverfahren zur Anbindung des jeweiligen Energieabsorptionsbauteils an den Stoßfängerquerträger bzw. an die Anbindungsplatte auf weitere Befestigungsmittel, wie z.B. Schrauben verzichtet werden, womit einerseits eine Gewichtsersparnis einhergeht und andererseits ein Setzverhalten ausgeschlossen wird.

Nachfolgend ist die Erfindung anhand von Ausführungsbeispielen unter Bezugnahme auf die beigefügten Zeichnungen beschrieben, wobei weitere Vorteile und bevorzugte Ausgestaltungen der vorliegenden Erfindung dem Fachmann deutlich werden.

In den Zeichnungen zeigt:
- **Fig. 1:**: eine isometrische Teilansicht einer bevorzugten Ausführungsform der vorliegenden Erfindung;
- **Fig. 2:**: eine Explosionsansicht der bevorzugten Ausführungsform der vorliegenden Erfindung in Figur 1;
- **Fig. 3:**: eine seitliche Ansicht der bevorzugten Ausführungsform in Figur 1 mit schematisch gekennzeichneten Faltenbildungsinitialisierungsabschnitt vor einem crashbedingten Krafteintrag;
- **Fig. 4:**: in einer vergrößerten Darstellung ein Ausschnitt eines Querschnittes durch die in Figur 3 gezeigte Ausführungsform der Erfindung;
- **Fig. 5:**: eine weitere seitliche Ansicht der bevorzugten Ausführungsform aus Figur 1 mit beginnender Faltenbildung in dem Faltenbildungsinitialisierungsabschnitt bei einem crashbedingten Krafteintrag;
- **Fig. 6:**: unterschiedliche Kraft-Weg-Kurven von verschieden ausgebildeten Energieabsorptionsbauteilen, bei denen ein identischer Energieeintrag stattgefunden hat;
- **Fig. 7:**: eine isometrische Teilansicht einer weiteren bevorzugten Ausführungsform der vorliegenden Erfindung.

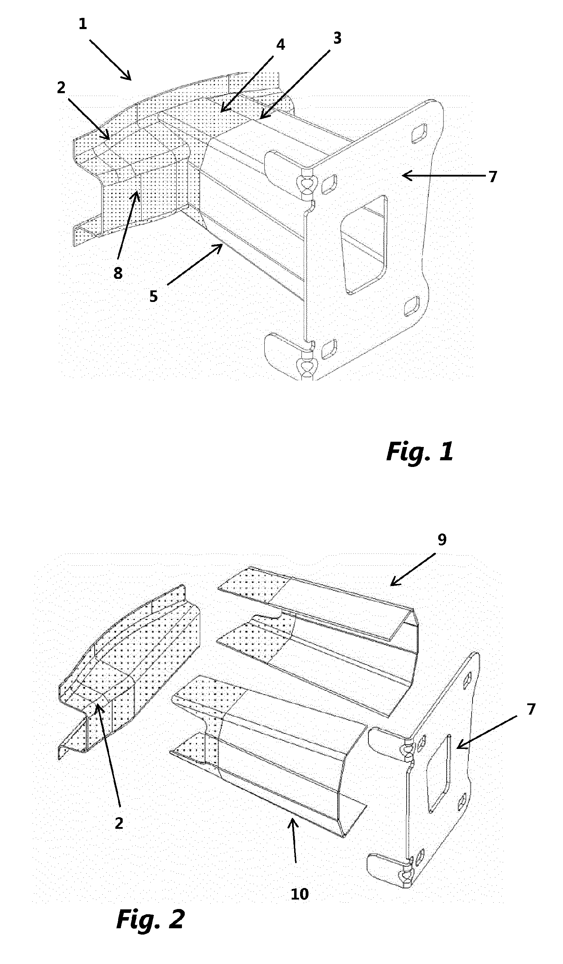

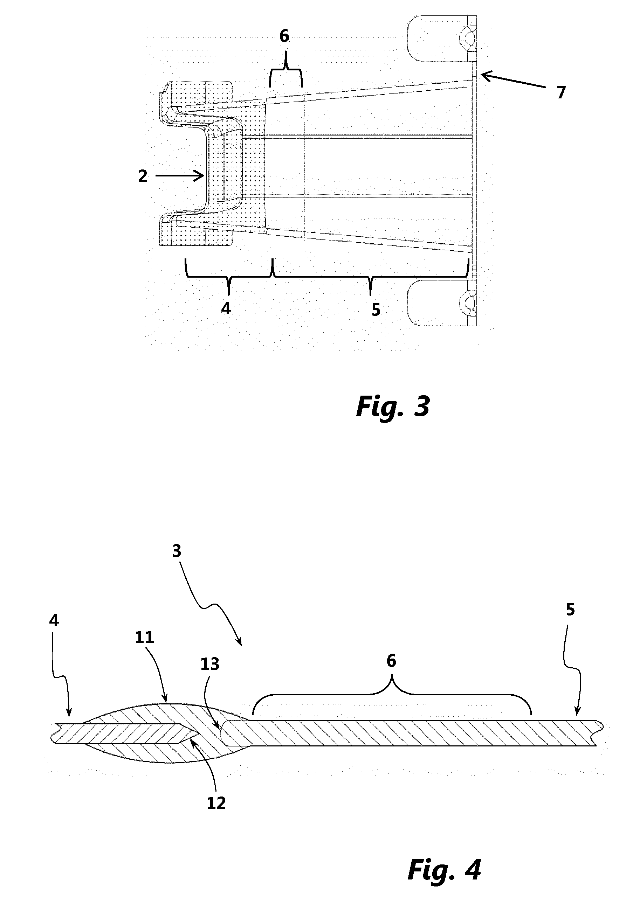

Mit Verweis auf Figuren 1 und 2 zeigen diese eine isometrische Teilansicht bzw. eine Explosionsdarstellung einer bevorzugten Ausführungsform einer Stoßfängerquerträgerbaugruppe 1 der vorliegenden Erfindung. Die Stoßfängerquerträgerbaugruppe 1 umfasst einen Stoßfängerquerträger 2 mit einem Schließblech (nicht gezeigt), ein Energieabsorptionsbauteil 3 mit einem vorderen Abschnitt 4, einem hinteren Abschnitt 5 mit einem Faltenbildungsinitialisierungsabschnitt 6 (siehe Figuren 3, 4) sowie einer Anbindungsplatte 7. Der Stoßfängerquerträger 2 ist nur in einem Abschnitt gezeigt. Der Stoßfängerquerträger trägt im Bereich seiner beiden Endabschnitte jeweils ein Energieabsorptionsbauteil 3. Dargestellt ist in den Figuren der eine Endabschnitt des Stoßfängerquerträgers 2 mit einem daran angeschlossenen Energieabsorptionsbauteil 3.

Der Stoßfängerquerträger 2 des dargestellten Ausführungsbeispiels ist als Schalenprofil aus Stahl mit Schließblech (nicht gezeigt) ausgebildet. Denkbar sind aber auch sämtliche anderen möglichen Ausgestaltungsformen des Stoßfängerquerträgers 2, so dass er auch aus einer Kombination von Stahl und Leichtmetall in Gestalt eines geschlossenen Hohl- oder offenen Schalenprofils ausgebildet sein kann.

Nachstehend beschrieben ist das in den Figuren dargestellte Energieabsorptionsbauteil 3. Das weitere Energieabsorptionsbauteil der Stoßfängerquerträgerbaugruppe 1 ist entsprechend aufgebaut. Das Energieabsorptionsbauteil 3 der Stoßfängerquerträgerbaugruppe 1 ist als hybrides Bauteil aus zwei hybriden U-förmigen Schalen 9, 10 ausgebildet, deren Querschnitt sich in ihrer Längserstreckung in Richtung der Karosserie vergrößert. Das Energieabsorptionsbauteil 3 umfasst einen vorderen Abschnitt 4 und einen hinteren Abschnitt 5, wobei der vordere Abschnitt 4 aus Stahl und der hintere Abschnitt 5 aus einem Aluminiumwerkstoff ausgebildet ist, wobei bei dem dargestellten Ausführungsbeispiel zum Ausbilden des hinteren Abschnittes 5 eine Aluminiumlegierung aus der Gruppe AA6000 gewählt worden ist. Der vordere Abschnitt 4 ist mit dem hinteren Abschnitt 5 mittels Schweißlöten verbunden. Das Schweißlöten ist mit Schweiß- bzw. Lotzugabe durchgeführt worden. Hierdurch wird eine erhöhte lokale Steifigkeit durch ein Aufdicken des hybriden Halbzeugs mittels des zusätzlich eingebrachten Lotmaterials, bevorzugt auf Aluminiumbasis, im Bereich der Nahtstelle eingebracht.

Der Prozess des Schweißlötens wird dergestalt ausgeführt, dass sich an die durch das zugeführte Lotmaterial gebildete Schweißraupe 11 in dem hinteren Abschnitt 5 des Energieabsorptionsbauteils 3 ein sich über den Umfang erstreckender Abschnitt geringerer Festigkeit ausbildet, wobei die Breite dieses Abschnittes (in x-Richtung gesehen) hinreichend ist, damit in diesem Abschnitt 6 im Falle einer Energieabsorption (Crashfall) die für die Energieabsorption notwendige Faltenbildung beginnt. Daher wird dieser Abschnitt im Rahmen dieser Ausführungen auch als Faltenbildungsinitialisierungsabschnitt 6 angesprochen. Dieser Abschnitt 6 definiert den Bereich einer initialen Faltenbildung innerhalb des Energieabsorptionsbauteils 3. Zugleich wird durch diese Maßnahme die für die initiale Faltenbildung benötigte Deformationsenergie herabgesetzt, mithin die für eine ansonsten notwendige initiale Faltenbildung benötigte Kraftspitze reduziert. Dieses wirkt sich vorteilhaft auf eine gleichmäßige Energieabsorption über die Längserstreckung des hinteren Abschnittes 5 des Energieabsorptionsbauteils 3 aus.

Aufgrund des mechanischen Festigkeitskontrastes zwischen dem vorderen, aus Stahl hergestellten Abschnitt 4 und dem diesbezüglich weicheren Faltenbildungsinitialisierungsabschnitt 6 bildet der vordere Abschnitt 4 einen definierten Krafteinleitungsabschnitt in den hinteren Abschnitt 5, wodurch eine definierte Faltenbildung und damit eine definierte Energieabsorption begünstigt ist. Unterstützt wird dieses durch die als mechanische Stabilisierungsmanschette wirkende umlaufende Schweißraupe 11. Im Deformationsfall wird typischerweise der vordere Abschnitt nicht gefaltet. In seiner Längserstreckung ist dieser im Verhältnis zum hinteren Abschnitt 5 kleiner oder gleich ausgebildet. Bevorzugt weist der vordere Abschnitt 4 ab der hinteren Anlagefläche 8 des Querträgers 2 in Richtung der Karosserie wenigstens eine Längserstreckung von 5,0 mm auf, damit die Schweißlötverbindung zwischen vorderem Abschnitt 4 und hinterem Abschnitt 5 nicht durch das stoffschlüssige Fügen des Stoßfängerquerträgers 2 mit dem vorderen Abschnitt 4 des Energieabsorptionsbauteils 3 durch diesen weiteren Wärmeeintrag beeinflusst werden kann. Das Energieabsorptionsbauteil 3 liegt bei dem dargestellten Ausführungsbeispiel außerdem bevorzugt vollflächig bzw. weitestgehend vollflächig mit seiner Stirnseite am Querträger 2 an und umgreift diesen zumindest teilweise, wodurch zusätzlich Sorge dafür getragen ist, dass im vorderen Abschnitt 4 des Energieabsorptionsbauteils 3 keine Energieabsorption im Crashfalle durch Faltenbildung stattfinden kann, sondern diese in dem Faltenbildungsinitialisierungsabschnitt 6 beginnt und sich sukzessive in Richtung zu dem karosserieseitigen Abschluss des hinteren Abschnittes 5 fortsetzt. Hinsichtlich der Materialstärke, die auf die Leistungsfähigkeit wesentlichen Einfluss nehmen kann, wird in diesem bevorzugten Ausführungsbeispiel für den vorderen Abschnitt 4 ein Stahlblech mit 1,5 mm Dicke und für den hinteren Abschnitt 5 ein Aluminiumblech mit einer Dicke von 2,0 mm verwendet. Bevorzugt kommt dabei im hinteren Abschnitt 5 eine 6000er Aluminiumlegierung zum Einsatz. Denkbar ist aber auch, dass die Materialdicke des vorderen Abschnitts 4 zwischen 1,0 mm und 2,0 mm und des hinteren Abschnitts 5 zwischen 1,5 mm und 3,0 mm beträgt.

Figur 3 zeigt eine seitliche Ansicht der bevorzugten Ausführungsform aus Figur 1 mit schematisch gekennzeichnetem Faltenbildungsinitialisierungsabschnitt 6 vor einem crashbedingten Krafteintrag. Wie bereits oben erläutert, werden der vordere und der hintere Abschnitt 4 und 5 mittels Schweißlöten miteinander verbunden. Dadurch bedingt hat sich gezeigt, dass durch das Schweißlöten einerseits am Nahtbereich eine erhöhte lokale Steifigkeit eingestellt werden kann und andererseits im vorderen Teilabschnitt des hinteren Abschnittes 5 ein Faltenbildungsinitialisierungsabschnitt 6 ausgebildet wird. Dieser bewirkt, dass dem Energieabsorptionsbauteil 3 in diesem Teilbereich eine reduzierte Festigkeit immanent ist, die geeignet ist bei einem überwiegend horizontalen Krafteintrag einen definierten Faltvorgang im hinteren Abschnitt 5 zu initialisieren, bei dem die angebrachte Schweißlötnaht nicht reißt. In der Konsequenz bedeutet dies, dass der vordere Abschnitt 4 des Energieabsorptionsbauteils 3 sowohl als Anbindungsabschnitt an den Stoßfängerquerträger 2 als auch als Krafteinleitungsabschnitt zum definierten Einleiten zu absorbierender Kraft in den hinteren Abschnitt 5 fungiert, ohne selbst gefaltet zu werden. Demnach ist es möglich, dass die Festigkeit des Energieabsorptionsbauteils 3 im Bereich des Abschnittes 6 derart herabgesetzt werden kann, dass eine Faltenbildung auf niedrigem Niveau initialisiert werden kann und danach im hinteren Abschnitt 5 um eine relativ hohe mittlere Kraft oszilliert, wodurch annähernd der gleiche Weg zum Abbau der Energie benötigt wird, wie bei einem herkömmlichen Mehrkammer-Strangpressprofil aus demselben Aluminiumwerkstoff. Hervorzuheben ist, dass gegenüber einem Energieabsorptionsbauteil als Mehrkammer-Strangpressprofil allerdings keine Kontaktkorrosionsprobleme bei der Anbindung des Energieabsorptionsbauteils 3 einhergehen, ein Ausscheren durch das stoffschlüssige Verbinden vermieden wird und nur ein geringerer Bauraum notwendig ist. Figur 4 zeigt eine vergrößerte Schnittdarstellung durch den Bereich des Überganges von dem vorderen Abschnitt 4 zu dem hinteren Abschnitt 5 des Energieabsorptionsbauteils 3. Deutlich erkennbar ist die die beiden Abschnitte 4, 5 verbindende Schweiß- bzw. Lotraupe 11. Diese stärkt mechanisch nach Art einer Stabilisierungsmanschette den hinteren Abschluss 12 des Abschnittes 4. Erkennbar ist aus dieser Figur auch, dass mit ihren zueinander weisenden Abschlüssen 12, 13 der vordere Abschnitt 4 und der hintere Abschnitt 5 mit ihren Stößen fluchtend zueinander angeordnet sind. Der an die Schweißraupe 11 grenzende Faltenbildungsinitialisierungsabschnitt 6 ist durch den Wärmeeintrag beim Durchführen der Fügeverbindung zwischen den beiden Abschnitten 4, 5 in einer solchen Breite erwärmt worden, dass in der in Figur 4 erkennbaren Breite des Faltenbildungsinitialisierungsabschnittes 6 die Festigkeit gegenüber den in Richtung zur Karosserie angrenzenden Bereichen des hinteren Abschnittes 5 signifikant herabgesetzt ist. Die Breite des Faltenbildungsinitialisierungsabschnittes 6 beträgt über seine Längserstreckung in Fahrzeugrichtung betrachtet (x-Richtung) bevorzugt 25 mm, wobei die Festigkeit darin sukzessive, vom hinteren Abschnitt 5 zur Schweißraupe 11 gerichtet, bevorzugt um etwa 30% verringert wird. Insgesamt hat sich gezeigt, dass dieser Abschnitt in einem Bereich von 10 mm bis 40 mm ausgebildet werden kann, wobei eine Festigkeitsreduktion in diesem Abschnitt 6 von 20% bis 50% gegenüber dem übrigen Bereich des hinteren Abschnitts 5 zielführend ist. Dabei versteht es sich, dass die Ausbildung der Festigkeitsreduktion in dem Faltenbildungsinitialisierungsabschnitt 6 ergänzend auch noch nach dem Schweißlöten durch zusätzliches definiertes partielles Erwärmen im Bereich der Rekristallisationstemperatur und anschließendes Abkühlen eingestellt werden kann.

Bei dem in den Figuren dargestellten Ausführungsbeispiel ist das Energieabsorptionsbauteil 3 bis auf seine Anbindungsplatte 7 aus zwei U-förmigen Schalen 9, 10 gebildet. Die beiden Schalen 9, 10 sind in diesem Ausführungsbeispiel zueinander überlappend angeordnet und mittels Fügen stoffschlüssig miteinander verbunden. In einem nicht gezeigten weiteren Ausführungsbeispiel können die beiden Schalen 9, 10 auch auf Stoß zueinander angeordnet und miteinander stoffschlüssig gefügt sein. Wobei ein Fachmann erkennt, dass die U-förmigen Schalen 9, 10 alternativ nur teilweise im Bereich der Kanten miteinander gefügt sein können. So dass es durchaus auch denkbar ist, dass die Schalen 9, 10 lediglich im Bereich des hinteren Abschnitts 5 zumindest bereichsweise miteinander stoffschlüssig gefügt sind, wohingegen die Schalen 9, 10 im Bereich des vorderen Abschnitts 4 nicht miteinander gefügt werden. In diesem Zusammenhang ist darauf hinzuweisen, dass dabei, den in den beiden Abschnitten 4 und 5 verwendeten unterschiedlichen Materialien entsprechend, unterschiedliche Fügeverfahren zum Einsatz kommen. Mit anderen Worten werden die Schalen 9 und 10 im Bereich der Kanten des vorderen Abschnitts 4 mittels MAG-Schweißen und im Bereich der Kanten des hinteren Abschnitts 5 mittels MIG-Schweißen miteinander stoffschlüssig verbunden und bilden dadurch das Energieabsorptionsbauteil 3 aus. Dem Umstand geschuldet, dass der hintere Abschnitt 5 aus einer Aluminiumlegierung ausgebildet ist, ermöglicht zusätzlich ein einfaches Anbinden der ebenfalls aus einer Aluminiumlegierung bestehenden Anbindungsplatte 7 an das Energieabsorptionsbauteil 3 mittels eines standardisierten und bekannten MIG-Schweißprozesses. Ähnlich verhält es sich auch mit dem vorderen Abschnitt 4 des Energieabsorptionsbauteils 3, der stoffschlüssig mittels eines bekannten MAG-Schweißprozesses am Stoßfängerquerträger 2 befestigt werden kann. Dem im Stand der Technik bekannten Problem der Kontaktkorrosion bei hybriden Bauteilen kann somit begegnet werden, da die Verbindungsstelle zwischen Aluminium und Stahl durch eine KTL-Beschichtung vollständig benetzt werden kann. Außerdem kann auf zusätzliche Hilfsmittel, wie beispielsweise Schrauben oder Verbindungsbauteile vollständig verzichtet werden.

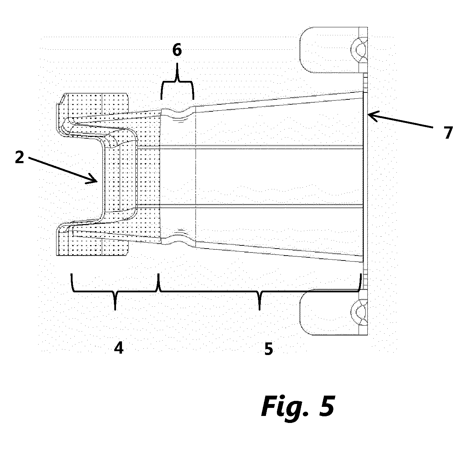

Figur 5 zeigt schematisiert die Darstellung der Figur 3 in der initialen Phase einer ersten Faltenbildung. Diese beginnt aufgrund der reduzierten Festigkeit in dem Faltenbildungsinitialisierungsabschnitt 6 und wird unterstützt durch die in Richtung des vorderen Abschnitts 4 verjüngte Ausgestaltung des hinteren Abschnittes 5. In dieser Figur ist deutlich erkennbar, dass sich der vordere Abschnitt 4 aufgrund seiner hohen Festigkeit bei einem crashbedingten horizontalen Krafteintrag nicht verformt, sondern als starrer Krafteinleitungsabschnitt fungiert und die Faltenbildung zum Abbau der eingebrachten Energie genau in Faltenbildungsinitialisierungsabschnitt 6 initialisiert wird. Dem Umstand geschuldet, dass der hintere Abschnitt 5 im Anschluss an diesen Abschnitt 6 härter ausgebildet ist gewährleistet, dass die eingeleitete Kraft auf hohem Niveau knapp unterhalb der vorgegebenen zulässigen Krafteinleitung F**ₘₐₓ** abgebaut wird, wodurch ein Kraftabbau gegenüber einem herkömmlichen Energieabsorptionsbauteil in Schalenbauweise vor allem auch ohne das Einbringen von zusätzlichen Sicken zur Falteninitialisierung mit deutlich verkürztem Weg realisierbar und damit deutlich verbessert ist.

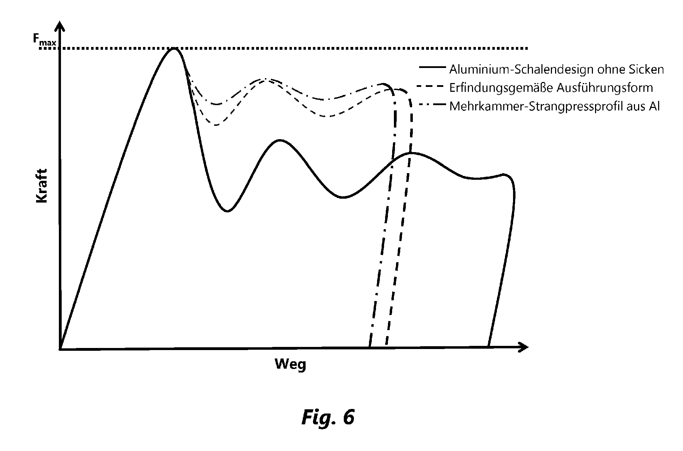

Figur 6 zeigt ein Kraft-Weg-Diagramm, in dem Kraft-Weg-Kurven von verschieden ausgebildeten Energieabsorptionselementen einander gegenübergestellt sind. Dabei entspricht F**ₘₐₓ** einem vom Automobilhersteller vorgegebenen zulässigen Maximalkrafteintrag, der sich aus dem Kraftniveau der jeweiligen Längsträgerstruktur eines entsprechenden Fahrzeuges ergibt. Das bedeutet, dass bei einem crashbedingten Krafteintrag bis zum Erreichen von F**ₘₐₓ** sichergestellt sein muss, dass eine plastische Deformation der Längsträger und damit der Karosseriestruktur ausgeschlossen ist, damit eine Reparatur durch Austauschen des entsprechenden Energieabsorptionsbauteils gewährleistet werden kann. Es versteht sich, dass dieser Wert bei verschiedenen gestalteten Fahrzeugen differieren kann, weshalb in Figur 6 lediglich ein qualitatives Kraft-Weg-Diagramm gezeigt ist. Offenbart sind darin charakteristische Kraft-Weg-Kurven unterschiedlicher Energieabsorptionsbauteile mit gleichem Energieeintrag und vorgegebener Kraftschwelle F**ₘₐₓ**. Daraus lässt sich entnehmen, dass die darin gezeigten Kraft-Weg-Kurven der Energieabsorptionsbauteile bei gleichen Krafteintrag voneinander unterschiedliche Deformationswege aufweisen, um die eingebrachte Kraft zu absorbieren. Die darin enthaltene Kraft-Weg-Kurve für ein herkömmliches Energieabsorptionsbauteil in Schalenprofilbauweise, welches aus Aluminium ohne zusätzlich eingebrachte Sicken zur Falteninitialisierung ausgebildet ist, lässt erkennen, dass es zunächst eines hohen Kraftpeaks bedarf, um den Faltbeginn zu initialisieren. Ist der Energieabsorptionsprozess durch initiale Faltenbildung eingeleitet, oszilliert die mittlere Kraft im Anschluss daran lediglich auf geringem Niveau, sodass ein vergleichsweise großer Weg und damit ein lang ausgebildetes Energieabsorptionsbauteil benötigt wird, um die eingebrachte Energie ohne Beschädigung des Längsträgers bzw. der Karosseriestruktur zu absorbieren.

Dagegen zeigen sowohl die Kraft-Weg-Kurve des in der erfindungsgemäßen Stoßfängerquerträgerbaugruppe 1 zum Einsatz gebrachten hybriden Energieabsorptionsbauteils in Schalenbauweise als auch das Mehrkammer-Aluminiumstrangpressprofil (strichpunktierte Darstellung) einen ähnlichen Verlauf. Bei der erfindungsgemäßen Ausführungsform des Energieabsorptionsbauteils 3 wird zunächst über den vorderen Abschnitt 4 aus Stahl, der eine hohe Festigkeit hat, eine Kraft F**ₘₐₓ** eingeleitet. Durch die vorbeschriebene Herabsetzung der Festigkeit in dem Faltenbildungsinitialisierungsabschnitt 6 wird gewährleistet, dass bei einer crashbedingten Krafteinleitung der Faltenbeginn genau in diesem Abschnitt 6 beginnen kann und anschließend, aufgrund des härteren hinteren Abschnitts 5 um eine hohe mittlere Kraft oszilliert, wodurch der benötigte Weg zur Energieabsorption gegenüber dem oben beschriebenen Schalenprofil ohne Sicken deutlich verkürzt ist. Das Mehrkammer-Strangpressprofil aus Aluminiumwerkstoff unterliegt ebenfalls dem Kraftpeak bei F**ₘₐₓ** und oszilliert anschließend, aufgrund der darin ausgebildeten Kammerung (Rippenverstärkung) mit einer geringen Amplitude um eine hohe mittlere Kraft, wodurch ein ähnlicher Weg zur Energieabsorption benötigt wird, wie bei der erfindungsgemäßen Ausführungsform des Energieabsorptionsbauteils 3.

Da der Bauraum in Kraftfahrzeugen begrenzt ist, ist gewünscht, die Energieabsorptionsbauteile so kurz wie möglich auszubilden, damit Fahrzeugüberhänge vermieden werden können. Dies ist sowohl mit Mehrkammer-Strangpressprofilen aus Aluminiumwerkstoff möglich, als auch mit der erfindungsgemäßen Ausführungsform des Energieabsorptionsbauteils 3, wobei letzteres den zusätzlichen Vorteil mit sich bringt, dass Kontaktkorrosionsprobleme bei der Anbindung bzw. Einbindung in/an eine Stoßfängerquerträgerbaugruppe beseitigt oder zumindest verringert sind.

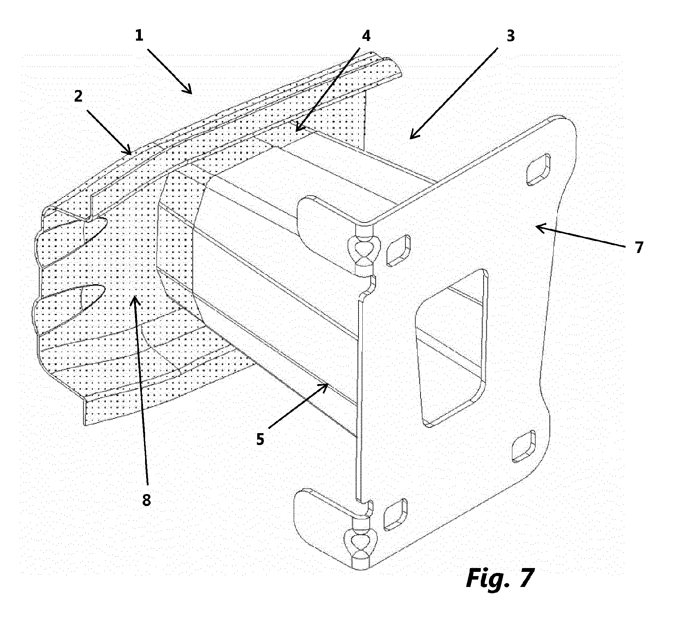

Figur 7 zeigt eine isometrische Teilansicht einer weiteren bevorzugten Ausführungsform der vorliegenden Erfindung. Im Wesentlichen entspricht diese Ausführungsform der bereits zu den vorangegangenen Figuren näher beschriebenen, weshalb die gleichen Bezugszeichen verwendet werden und nachfolgend nur auf die Unterschiede näher eingegangen wird. Wie aus der Abbildung ersichtlich ist, unterscheidet sich diese Ausführungsform von der zuvor beschriebenen dadurch, dass der vordere Abschnitt 4 des Energieabsorptionsbauteils 3 den Stoßfängerquerträger 2 nicht umgreift, sondern an dessen zur Karosserie gerichteten hinteren Anlagefläche 8 vollflächig angebunden ist. Ein Umgreifen des Stoßfängerquerträgers 2 ist nicht zwingend notwendig, um sicherzustellen, dass der vordere Abschnitt 4 lediglich als Krafteinleitungsabschnitt fungieren kann ohne selbst deformiert zu werden. Zudem bleibt bei diesem Ausführungsbeispiel der Querschnitt des Energieabsorptionsbauteils 3 in seiner Längserstreckung im Wesentlichen gleich. Ausschlaggebend ist folglich auch hier wiederum der ausgebildete Faltenbildungsinitialisierungsabschnitt, der sich auch bei diesem Ausführungsbeispiel unmittelbar angrenzend an die durch eine Schweißraupe gebildete Fügezone, mit der der vordere Abschnitt 4 mit dem hinteren Abschnitt 5 verbunden ist, anschließt. Bei diesem Ausführungsbeispiel stellen sich dieselben Vorteile ein wie bei dem zu den Figuren 1 bis 6 beschriebenen Ausführungsbeispiel.

In einer nicht gezeigten weiteren Ausführungsform sind entlang der Längserstreckung der Energieabsorptionsbauteile 3 zusätzlich jeweils wenigstens zwei gegenüberliegende und nach innen weisende Sicken ausgebildet. Ferner ist es möglich, dass zur weiteren Unterstützung einer definierten Faltenbildung und damit zu einer definierten Energieabsorption entlang des Querverlaufs der Energieabsorptionsbauteile wenigstens eine weitere Sicke im Energieabsorptionsbauteil 3 ausgebildet ist, zwingend notwendig ist dies aber nicht.

Nicht näher in den Figuren dargestellt ist das Herstellungsverfahrens der erfindungsgemäßen Stoßfängerquerträgerbaugruppe 1. In einem ersten Schritt werden zwei schweißgelötete Halbzeuge hergestellt, aus denen die Schalen 9, 10 geformt werden. Dabei ist vorgesehen, dass die beiden materialunterschiedlichen Blechplatinen derart gefügt werden, dass sich bereits durch den Wärmeeintrag beim Fügen der Faltenbildungsinitialisierungsabschnitt als Abschnitt reduzierter Festigkeit ausbildet. Durch ein herkömmliches Tiefzieh- und/oder Biegeverfahren werden die beiden Halbzeuge anschließend zu den U-förmigen Schalen 9, 10 umgeformt. Im Anschluss daran werden die beiden U-förmigen Schalen 9, 10 überlappend und/oder auf Stoß wenigstens teilweise entlang des hinteren Abschnitts 5 mittels MIG-Schweißen und/oder wenigstens teilweise entlang des vorderen Abschnitts 4 mittels MAG-Schweißen stoffschlüssig gefügt. Danach wird der hintere Abschnitt 5 an eine Anbindungsplatte 7 aus Aluminium mittels MIG-Schweißen und der vordere Abschnitt 4 an den Querträger 2 aus Stahl mittels MAG-Schweißen stoffschlüssig gefügt.

Die vorstehende Beschreibung stellt nur bevorzugte Ausführungsbeispiele dar. Die geltenden Ansprüche sind nicht allein auf diese Ausführungsformen beschränkt. Vielmehr sollen alle gleichwertigen Änderungen und Modifikationen, die in diesem technischen Gebiet durch einen Fachmann abgeleitet oder vorgenommen werden, zum Schutzbereich der vorliegenden Erfindung im Umfange der geltenden Ansprüche gehören.

### Bezugszeichenliste

- 1: Stoßfängerquerträgerbaugruppe
- 2: Stoßfängerquerträger
- 3: Energieabsorptionsbauteil
- 4: vorderer Abschnitt
- 5: hinterer Abschnitt
- 6: Wärmeeinflusszone
- 7: Anbindungsplatte
- 8: hintere Anlagefläche
- 9: Schale
- 10: Schale
- 11: Schweißraupe
- 12: Abschluss
- 13: Abschluss

## Patentansprüche

1. Stoßfängerquerträgerbaugruppe für ein Kraftfahrzeug, umfassend einen profilierten Stoßfängerquerträger (2) und daran jeweils zum Chassis des Fahrzeuges weisend angeschlossene Energieabsorptionsbauteile (3), wobei jedes Energieabsorptionsbauteil (3) aus einem vorderen, zum Stoßfängerquerträger (2) weisenden Abschnitt (4) und einem hinteren, von dem Stoßfängerquerträger (2) wegweisenden Abschnitt (5) hergestellt ist und der vordere Abschnitt (4) mit dem hinteren Abschnitt (5) durch eine Fügeverbindung mit Schweiß- oder Lotzugabe, unter Ausbildung einer Fügeraupe (11) verbunden ist und wobei der hintere Abschnitt (5) einen sich umfänglich erstreckenden, gegenüber den angrenzenden Abschnitten mechanisch nachgiebigeren Faltenbildungsinitialisierungsabschnitt (6) umfasst, **dadurch gekennzeichnet, dass** der vordere Abschnitt (4) aus Stahl und der hintere Abschnitt (5) aus einem Aluminiumwerkstoff hergestellt sind und dass der Faltenbildungsinitialisierungsabschnitt (6) zwischen dem Abschnitt der Fügeraupe (11) auf der einen Seite und den benachbarten weiteren Abschnitten des hinteren Abschnittes (5) auf der anderen Seite angeordnet ist, wobei der Wärmeintrag beim Fügen zugleich genutzt wird, um den Faltenbildungsinitialisierungsabschnitt (6) auszubilden.

2. Stoßfängerquerträgerbaugruppe nach Anspruch 1, **dadurch gekennzeichnet, dass** der vordere Abschnitt (4) einen definierten Krafteinleitungsabschnitt ausbildet, der im Deformationsfall nicht initial deformiert wird und in seiner Längserstreckung im Verhältnis zum hinteren Abschnitt (5) kleiner oder gleich ausgebildet ist.

3. Stoßfängerquerträgerbaugruppe nach einem der vorangehenden Ansprüche, **dadurch gekennzeichnet, dass** der vordere Abschnitt (4) ab einer hinteren Anlagefläche (8) des Querträgers (2) in Richtung Karosserie wenigstens eine Längserstreckung von 5,0 mm aufweist.

4. Stoßfängerquerträgerbaugruppe nach einem der vorangehenden Ansprüche, **dadurch gekennzeichnet, dass** die Materialdicke des vorderen Abschnitts (4) zwischen 1,0 mm und 2,0 mm und des hinteren Abschnitts (5) zwischen 1,5 mm und 3,0 mm beträgt.

5. Stoßfängerquerträgerbaugruppe nach einem der vorangehenden Ansprüche, **dadurch gekennzeichnet, dass** eine Anbindungsplatte (7) aus einem Aluminiumwerkstoff hergestellt ist und der vordere Abschnitt (4) stoffschlüssig mit dem Querträger (2) und der hintere Abschnitt (5) stoffschlüssig mit der Anbindungsplatte (7) gefügt sind.

6. Stoßfängerquerträgerbaugruppe nach einem der vorhergehenden Ansprüche, **dadurch gekennzeichnet, dass** der Faltenbildungsinitialisierungsabschnitt (6) in Längserstreckung des Energieabsorptionsbauteils (3) gesehen eine Breite zwischen 10 mm und 40 mm aufweist.

7. Stoßfängerquerträgerbaugruppe nach einem der vorangehenden Ansprüche, **dadurch gekennzeichnet, dass** die Festigkeit des hinteren Abschnittes (5) im Bereich seines Faltenbildungsinitialisierungsabschnittes (6) ausgehend von dem daran angrenzenden hinteren Abschnitt (5) zur Fügeraupe (11) gerichtet, sukzessive abnimmt und zwischen 20% und 50% gegenüber der Festigkeit in dem übrigen hinteren Abschnitt (5) verringert ist.

8. Stoßfängerquerträgerbaugruppe nach einem der vorangehenden Ansprüche, **dadurch gekennzeichnet, dass** der hintere Abschnitt (5) des Energieabsorptionsbauteils (3) von seinem chassisseitigen Ende in Richtung zum vorderen Abschnitt (4) hin verjüngt ist.

9. Stoßfängerquerträgerbaugruppe nach einem der vorangehenden Ansprüche, **dadurch gekennzeichnet, dass** die Energieabsorptionsbauteile (3) den Stoßfängerquerträger (2) zumindest teilweise umgreifen.

10. Stoßfängerquerträgerbaugruppe nach einem der vorangehenden Ansprüche, **dadurch gekennzeichnet, dass** entlang der Längserstreckung der Energieabsorptionsbauteile (3) jeweils wenigstens zwei einander gegenüberliegende, nach innen eingeprägte Sicken ausgebildet sind.

11. Stoßfängerquerträgerbaugruppe nach einem der vorangehenden Ansprüche, **dadurch gekennzeichnet, dass** entlang des Querverlaufs der Energieabsorptionsbauteile (3) wenigstens eine Sicke im Energieabsorptionsbauteil (3) ausgebildet ist.

12. Stoßfängerquerträgerbaugruppe nach einem der vorangehenden Ansprüche, **dadurch gekennzeichnet, dass** jeder Abschnitt (4, 5) aus zwei U-förmigen Schalen (9, 10) gebildet ist, wobei diese überlappend und/oder auf Stoß aneinander grenzen.

13. Verfahren zum Herstellen einer Stoßfängerquerträgerbaugruppe nach einem der Ansprüche 1 bis 12, umfassend die Schritte:
Bereitstellen eines schweißgelöteten Halbzeuges als Platine für einen nachfolgenden Umformschritt, welches Halbzeug in seinem vorderen Abschnitt eine Stahlplatine und in seinem hinteren Abschnitt eine Platine aus einem Aluminiumwerkstoff ausweist und der Fügeprozess der beiden Abschnitte dergestalt ausgeführt wird, dass angrenzend an die Schweißraupe in dem hinteren Abschnitt ein Abschnitt reduzierter Festigkeit mit einer Breite von wenigstens 10 mm ausgebildet wird,
Herstellen von zwei Schalen (9, 10) durch Umformen der schweißgelöteten Platinen mittels eines Tiefzieh- und/oder Biegeverfahrens
stoffschlüssiges Fügen der beiden Schalen (9, 10) überlappend und/oder auf Stoß wenigstens teilweise entlang des vorderen Abschnitts (4) mittels MAG-Schweißen und/oder wenigstens teilweise entlang des hinteren Abschnitts (5) mittels MIG-Schweißen,
stoffschlüssiges Anbinden des hinteren Abschnitts (5) an eine Anbindungsplatte (7) aus Aluminium mittels MIG-Schweißen und
stoffschlüssiges Anbinden des vorderen Abschnitts (4) an den Stoßfängerquerträger (2) aus Stahl mittels MAG-Schweißen.

14. Verfahren nach Anspruch 13, **dadurch gekennzeichnet, dass** die Stoßfängerquerträgerbaugruppe (1) mit einer Korrosionsbeschichtung, aufgetragen im Wege einer katodischen Tauchlackierung (KTL) beschichtet wird.
